(19) Europäisches Patentamt

European Patent Office

Office européen des brevets

(11) **EP 1 442 391 B1**

(12) **EUROPÄISCHE PATENTSCHRIFT**

(45) Veröffentlichungstag und Bekanntmachung des Hinweises auf die Patenterteilung:
**31.08.2005 Patentblatt 2005/35**

(21) Anmeldenummer: 02774716.1

(22) Anmeldetag: **15.10.2002**

(51) Int Cl.$^7$: **G06F 17/10**

(86) Internationale Anmeldenummer:
**PCT/EP2002/011523**

(87) Internationale Veröffentlichungsnummer:
**WO 2003/034649 (24.04.2003 Gazette 2003/17)**

(54) **VERFAHREN UND VORRICHTUNG ZUM ABSICHERN EINER BERECHNUNG IN EINEM KRYPTOGRAPHISCHEN ALGORITHMUS**

METHOD AND DEVICE FOR GUARANTEEING A CALCULATION IN A CRYPTOGRAPHIC ALGORITHM

PROCEDE ET DISPOSITIF POUR GARANTIR UN CALCUL DANS UN ALGORITHME CRYPTOGRAPHIQUE

(84) Benannte Vertragsstaaten:
**DE FR**

(30) Priorität: **17.10.2001 DE 10151139**
**19.12.2001 DE 10162496**

(43) Veröffentlichungstag der Anmeldung:
**04.08.2004 Patentblatt 2004/32**

(73) Patentinhaber: **Infineon Technologies AG**
**81669 München (DE)**

(72) Erfinder:
• **FISCHER, Wieland**
**80469 München (DE)**
• **SEIFERT, Jean-Pierre**
**81669 München (DE)**

(74) Vertreter: **Stöckeler, Ferdinand et al**
**Schoppe, Zimmermann,**
**Stöckeler & Zinkler**
**Postfach 246**
**82043 Pullach bei München (DE)**

(56) Entgegenhaltungen:
EP-A- 0 872 795          US-A- 5 991 415

• BONG D ET AL: "OPTIMIZED SOFTWARE IMPLEMENTATIONS OF THE MOLULAR EXPONENTIATION ONGENERAL PURPOSE MICROPROCESSORS" COMPUTERS & SECURITY. INTERNATIONAL JOURNAL DEVOTED TO THE STUDY OF TECHNICAL AND FINANCIAL ASPECTS OF COMPUTER SECURITY, ELSEVIER SCIENCE PUBLISHERS. AMSTERDAM, NL, Bd. 8, Nr. 7, 1. November 1989 (1989-11-01), Seiten 621-630, XP000072275 ISSN: 0167-4048
• CHUNG-HSIEN WU ET AL: "RSA cryptosystem design based on the chinese remainder theorem" DESIGN AUTOMATION CONFERENCE 2001, PROCEEDINGS OF THE ASP-DAC 2001 ASIA AND SOUTH PACIFIC, 30. Januar 2001 (2001-01-30) - 2. Februar 2001 (2001-02-02), Seiten 391-395, XP010537837
• COMBA P G: "EXPONENTIATION CRYPTOSYSTEMS ON THE IBM PC" IBM SYSTEMS JOURNAL, IBM CORP. ARMONK, NEW YORK, US, Bd. 29, Nr. 4, 1990, Seiten 526-538, XP000265347 ISSN: 0018-8670
• SHAND M ET AL: "FAST IMPLEMENTATIONS OF RSA CRYPTOGRAPHY" PROCEEDINGS OF THE SYMPOSIUM ON COMPUTER ARITHMETIC. WINDSOR, JUNE 29 - JULY 2, 1993, LOS ALAMITOS, IEEE COMP. SOC. PRESS, US, Bd. SYMP. 11, 29. Juni 1993 (1993-06-29), Seiten 252-259, XP000419946

- GROSSSCHAEDL J: "HIGH-SPEED RSA HARDWARE BASED ON BARRET'S MODULAR REDUCTION METHOD" CRYPTOGRAPHIC HARDWARE AND EMBEDDED SYSTEMS. 2ND INTERNATIONAL WORKSHOP, CHES 2000, WORCHESTER, MA, AUG. 17 - 18, 2000 PROCEEDINGS, LECTURE NOTES IN COMPUTER SCIENCE, BERLIN: SPRINGER, DE, Bd. 1965, 17. August 2000 (2000-08-17), Seiten 191-203, XP001049133 ISBN: 3-540-41455-X

- QUISQUATER J-J ET AL: "FAST DECIPHERMENT ALGORITHM FOR RSA PUBLIC-KEY CRYPTOSYSTEM" ELECTRONICS LETTERS, IEE STEVENAGE, GB, Bd. 18, Nr. 21, 14. Oktober 1982 (1982-10-14), Seiten 905-907, XP000577331 ISSN: 0013-5194

**Beschreibung**

Die vorliegende Erfindung bezieht sich auf die Kryptographie und insbesondere auf ein Verfahren und eine Vorrichtung zum Absichern einer Berechnung in einem kryptographischen Algorithmus.

Die modulare Exponentiation ist eine der Kernberechnungen für verschiedene kryptographische Algorithmen. Ein Beispiel für einen weit verbreiteten kryptographischen Algorithmus ist das RSA-Kryptosystem, das beispielsweise in "Handbook of Applied Cryptography", Menezes, van Oorschot, Vanstone, CRC Press, 1996, Kapitel 8.2, beschrieben ist. Das RSA-Kryptosystem arbeitet folgendermaßen. Bei der Verschlüsselung verschlüsselt eine Partei B eine Nachricht m für eine andere Partei A. Nur die Partei A soll die von B erhaltene verschlüsselte Nachricht entschlüsseln. Die Partei B erhält zunächst den öffentlichen Schlüssel von der Partei A. Die Partei B stellt dann die zu verschlüsselnde Nachricht als Ganzzahl m dar. Dann verschlüsselt die Partei B die Nachricht m folgendermaßen:

$$c = m^e \bmod n \qquad (1)$$

In Gleichung (1) stellt m die Klartext-Nachricht dar. e ist der öffentliche Schlüssel. n ist der Modul und ist ebenfalls öffentlich. c stellt die verschlüsselte Nachricht dar.

Die Partei B sendet nun die verschlüsselte Nachricht c zu der Partei A.

Zur Entschlüsselung, also um den Klartext m wieder aus dem Geheimtext c zu erhalten, führt A folgende Berechnung aus:

$$m = c^d \bmod n \qquad (2)$$

In Gleichung (2) stellt d den privaten Schlüssel der Partei A dar, der vor Angriffen zu schützen ist.

In der Technik ist ferner auch ein RSA-Signaturalgorithmus bekannt. Hierbei wird folgendermaßen vorgegangen. Jede Entität A erzeugt zunächst zwei große Primzahlen p und q und berechnet dann den Modul n aus dem Produkt von p und q. Daraus wird dann, wie es ebenfalls im oben bezeichneten Fachbuch im Kapitel 11.3 beschrieben ist, eine Schlüsselerzeugung vorgenommen, so daß jede Partei einen öffentlichen Schlüssel hat, der aus n, also dem Modul, und e besteht, während jede Partei zusätzlich einen privaten Schlüssel d hat.

Zur RSA-Signaturerzeugung und Verifikation signiert die Entität A eine Nachricht m. Jede Entität B soll dann die Signatur von A verifizieren und die Nachricht m aus der Signatur wiedergewinnen können.

Bei der Signaturerzeugung berechnet die Entität A zunächst eine Ganzzahl m' = R(m). Danach führt die Entität A folgende Berechnung durch:

$$s = m'^d \bmod n \qquad (3)$$

s ist dabei die Signatur von A für die Nachricht m.

Zur Verifikation der Signatur der Partei A und zum Wiedergewinnen der Nachricht m muß die Partei B folgendermaßen vorgehen:

Zunächst muß die Partei B den öffentlichen Schlüssel (n, e) von A erhalten. Dann führt die Partei B folgende Berechnung durch:

$$m' = s^e \bmod n \qquad (4)$$

In Gleichung (4) ist e der öffentliche Schlüssel von A.

Die Partei B wird dann verifizieren, ob m' das Element aus einem Raum $M_R$ ist. Wenn dies nicht der Fall ist, wird die Signatur zurückgewiesen. Wenn dies der Fall ist, wird die Nachricht m wiedergewonnen, indem m = $R^{-1}$(m') berechnet wird.

Aus der obigen Darstellung wird ersichtlich, daß die modulare Exponentiation an vielerlei Stellen benötigt wird. Insbesondere wird zur RSA-Verschlüsselung in Gleichung (2) und zur RSA-Signaturerzeugung in Gleichung (3) mit dem geheimen Schlüssel d gerechnet.

Nachdem der geheime Schlüssel - genauso wie der öffentliche Schlüssel - bei typischen RSA-Systemen beträchtliche Längen annehmen kann, wie z. B. 1024 oder 2048 Bits, ist die modulare Exponentiation eine relativ aufwendige Berechnung insbesondere für Low Power Devices, wie z. B. Smart Cards, Mobiltelefone oder PDAS.

Um die modulare Exponentiation schneller berechnen zu können, ist es bekannt, den sogenannten chinesischen Restsatz (CRT; CRT = Chinese Remainder Theorem) einzusetzen, der im Absatz 2.120 des oben bezeichneten Fachbuchs beschrieben ist. Für RSA-Systeme wird insbesondere der Algorithmus von Garner bevorzugt, der ebenfalls in dem oben beschriebenen Fachbuch im Abschnitt 14.5.2 beschrieben ist. Der klassische Algorithmus für den CRT benötigt typischerweise eine modulare Reduktion mit dem Modul M, während dies bei dem Algorithmus nach Garner nicht der Fall ist. Statt dessen wird hier die eine "große" modulare Exponentiation in zwei "kleine" modulare Exponentiationen aufgeteilt, deren Ergebnisse dann gemäß dem chinesischen Restsatz zusammengesetzt werden. Obwohl hier zwei Exponentiationen benötigt werden, ist es dennoch günstiger, zwei "kleine" modulare Exponentiationen zu berechnen, als eine "große" modulare Exponentiation.

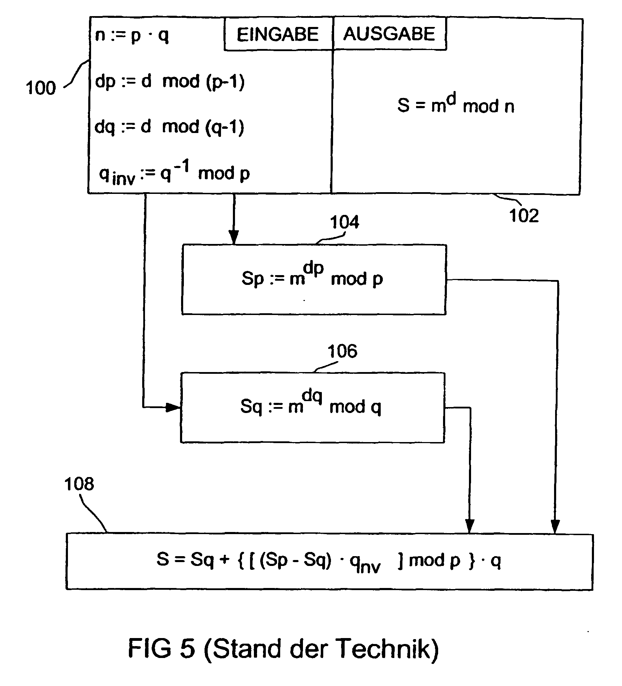

Zur Darstellung des RSA-CRT-Verfahren unter Verwendung des Algorithmus von Garner wird auf Fig. 5 Bezug genommen. In einem Block 100 sind die Eingangsparameter dargelegt, die alle lediglich von p und q sowie vom Schlüssel d abhängen, jedoch nicht von der beispielsweise zu signierenden Nachricht m. In einem Block 102 ist die Ausgabe des Algorithmus dargestellt, wie sie anhand von Gleichung (2) oder Gleichung (3) dargestellt worden ist. Es sei darauf hingewiesen, daß das in Fig. 5 beschriebene Verfahren nicht nur für eine Berechnung mit geheimen Schlüsseln verwendet wird, sondern selbstverständlich auch für eine modulare Exponentiation unter Verwendung des öffentlichen Schlüssels.

Aus den im Block 100 dargestellten Eingangsgrößen wird dann in einem Block 104 eine erste modulare Hilfs-Exponentiation (sp) berechnet. Analog dazu wird in einem Block 106 dann eine zweite modulare Hilfs-Exponentiation (sq) berechnet. Die Ergebnisse der ersten und der zweiten modularen Hilfs-Exponentiation werden dann in einem Block 108 gemäß dem chinesischen Restsatz zusammengesetzt, um das Ergebnis $s = m^d \bmod n$ zu erhalten. Generell ist das in Fig. 5 dargestellte RSA-CRT-Verfahren etwa um das Vier-fache schneller als die direkte Berechnung der im Block 102 dargestellten Ausgabe beispielsweise mittels des Square-and-Multiply-Algorithmus.

Aufgrund der Recheneffizienz ist der RSA-CRT-Algorithmus, der in Fig. 5 dargestellt ist, dem Square-and-Multiply-Algorithmus in jedem Fall vorzuziehen. Nachteilig am RSA-CRT-Algorithmus ist jedoch die Tatsache, daß er gegenüber kryptographischen "Angriffen" dahingehend sehr anfällig ist, daß der geheime Schlüssel d ermittelt werden kann, wenn eine fehlerhafte Berechnung des RSA-CRT-Algorithmus entsprechend ausgewertet wird. Diese Tatsache ist in "On the Importance of Eliminating Errors in Cryptographic Computations", Boneh, De-Millo, Lipton, J. Cryptology (2001) 14, S. 101 bis 119, beschrieben. Es wird ausgeführt, daß der geheime Signaturschlüssel, der bei einer Implementation des RSA-Verfahrens, das auf dem chinesischen Restsatz (CRT) basiert, aus einer einzigen fehlerhaften RSA-Signatur ermittelt werden kann.

Eine fehlerhafte RSA-Signatur kann dadurch erhalten werden, daß die Software oder die Hardware, die den Algorithmus ausführt, zu Fehlern gebracht wird, beispielsweise durch Aussetzen des Kryptoprozessors gegenüber einer elektrischen oder thermischen Belastung.

Als Gegenmaßnahmen gegen solche Angriffe, die auf Hardware-Fehlern basieren, wird vorgeschlagen, die Ausgabe jeder Berechnung zu überprüfen, bevor dieselbe aus dem Chip ausgegeben wird. Obwohl dieser zusätzliche Verifikationsschritt das Systemverhalten verschlechtern kann, wird davon gesprochen, daß diese zusätzliche Verifikation aus Sicherheitsgründen wesentlich ist.

Die einfachste Art und Weise der Verifikation besteht darin, eine Gegenrechnung mit dem öffentlichen Exponenten e durchzuführen, wobei folgende Identität festgestellt werden soll:

$$(m^d)^e = m \bmod n \qquad (5)$$

Dieser zusätzliche Verifikationsschritt ist jedoch vom Rechenaufwand her unmittelbar vergleichbar mit dem eigentlichen Signatur- bzw. Entschlüsselungs-Schritt und führt daher zu einer Halbierung des Systemverhaltens, liefert jedoch eine hohe Sicherheit.

Nachteilig ist jedoch auch, daß der öffentliche Schlüssel e in üblichen Protokollen, wie z. B. der ZKA-lib, nicht verfügbar ist. Die ZKA-lib ist eine Sammlung von Spezifikationen des zentralen Kreditausschusses, die regeln, welche Daten verfügbar sind. Für das RSA-CRT-Verfahren sind lediglich die im Block 100 von Fig. 5 gegebenen Eingangsdaten verfügbar. Der öffentliche Schlüssel e ist hierbei nicht Teil der in der ZKA-lib-Beschreibung vorgegebenen Parameter. Der Exponent e müßte daher aufwendig berechnet werden, um die "Gegenrechnung" gemäß Gleichung (5) durchführen zu können. Dies würde die Leistung der Signatur-Chipkarte weiter reduzieren und dürfte dazu führen, daß solche Algorithmen aufgrund ihrer langsamen Arbeitsweise keine Chance auf eine Durchsetzung am Markt haben.

In der Fachveröffentlichung von A. Shamir, "How to check modular Exponentiation", Rump Session, Eurocrypt 97, ist ein weiteres Verfahren beschrieben, um Signaturen zu verifizieren, die durch RSA-CRT-Verfahren erzeugt werden. In dieser Fachveröffentlichung wird vorgeschlagen, eine kleine Zufallszahl r (beispielsweise 32 Bits) zu verwenden und statt der Berechnung im Block 104 folgende Berechnung auszuführen:

$$sp' = m^d \bmod pr \qquad (6)$$

Statt dem Block 106 wird folgende Berechnung ausgeführt:

$$sp' = m^d \bmod qr \qquad (7)$$

Dann, unmittelbar nach den Berechnungen gemäß den Gleichungen (6) und (7) werden folgende Überprüfungsberechnungen durchgeführt:

$$sp' \bmod r = sq' \bmod r \qquad (8)$$

Wenn die Überprüfung gemäß Gleichung (8) wahr ist, wird sp und sq aus folgender Gleichung (9) erhalten:

$$sp' \bmod p = sp \; ; \; sq' \bmod q = sq \qquad (9)$$

Aus den durch Gleichung (9) erhaltenen Werten sp und sq wird dann die im Block 108 in Fig. 5 dargestellte Berechnung durchgeführt, um aus den modularen Hilfs-Exponentiationen das Gesamtergebnis s mittels des chinesischen Restsatzes zusammenzufügen.

Nachteilig an diesem Verfahren ist die Tatsache, daß zur Überprüfung lediglich der Hilfsparameter r sowie die Zwischenergebnisse sp' und sq' herangezogen werden, wobei die Überprüfung nicht zur Unterdrückung eines Ausgabewerts führt, wenn eine kryptographische Attacke stattgefunden hat, die möglicherweise nicht die Zwischenergebnisse sp', sq' oder den Parameter r beeinträchtigt hat, aber dann, beispielsweise in den in Gleichung (9) gegebenen Schritten und der abschließenden Zusammensetzung des Algorithmus zu einem Hardware-Fehler führt, der dazu verwendet werden kann, um den geheimen Schlüssel d unerlaubterweise auszuspähen.

Darüber hinaus wird in der zitierten Fachveröffentlichung von Boneh u. a. beispielsweise als Abwehrmaßnahme zur Sicherung des Fiat-Shamir-Schemas vorgeschlagen, Registerfehler, die auftreten, während der Prozessor auf eine Antwort von außen wartet, dadurch abzuwehren, daß Fehlererfassungsbits zum Schutz des internen Speichers eines Prozessors eingesetzt werden. Weitere Maßnahmen, um RSA-Signaturen zu schützen, bestehen darin, eine Zufälligkeit in das Signaturverfahren einzuführen. Die Zufälligkeit stellt sicher, daß der Unterzeichner niemals die gleiche Nachricht zweimal unterzeichnet. Ferner weiß der Verifizierer, wenn er eine fehlerhafte Signatur vorliegen hat, nicht den vollständigen Klartext, der unterzeichnet worden ist.

Die Aufgabe der vorliegenden Erfindung besteht darin, ein sicheres und effizientes Konzept zum Absichern einer Berechnung in einem kryptographischen Algorithmus zu schaffen.

Diese Aufgabe wird durch ein Verfahren gemäß Patentanspruch 1 und durch eine Vorrichtung gemäß Patentanspruch 14 gelöst.

Der vorliegenden Erfindung liegt die Erkenntnis zugrunde, daß die Eingangsdaten in eine kryptographische Berechnung, wie z. B. die im Block 100 von Fig. 5 dargestellten Daten, am ehesten "Opfer" einer kryptographischen Attacke werden. Untersuchungen haben gezeigt, daß kryptographische Attacken dadurch erfaßt werden können, daß Eingangsdaten für eine Berechnung in einem kryptographischen Algorithmus am ehestens durch einen feindlichen Angriff beeinträchtigt werden, während dies für Ergebnisse der kryptographischen Berechnung nicht derart signifikant zutrifft. Es wurde herausgefunden, daß die Eingangsdaten gewissermaßen ein Indikator für einen kryptographischen Angriff sind. Sind die Eingangsdaten nach dem Ausführen einer Berechnung in einem kryptographischen Algorithmus im Vergleich zu ihrem Zustand vor der Ausführung des kryptographischen Algorithmus unverändert, so kann mit hoher Sicherheit davon ausgegangen werden, daß keine kryptographische Attacke stattgefunden hat. Wird dagegen nach dem Ausführen einer Berechnung für einen kryptographischen Algorithmus festgestellt, daß sich die Eingangsdaten gegenüber ihrem Ursprungszustand verändert haben, so kann mit Sicherheit davon ausgegangen werden, daß eine kryptographische Attacke stattgefunden hat.

Beim erfindungsgemäßen Verfahren zum Absichern einer Berechnung in einem kryptographischen Algorithmus werden daher zunächst die Eingangsdaten für die kryptographische Berechnung bereitgestellt. Dann wird die Berechnung durchgeführt, um die Ausgangsdaten der Berechnung zu erhalten. Nach einer Durchführung der Berechnung wird dann überprüft, ob die Eingangsdaten während der Berechnung verändert wurden, und zwar unter Verwendung eines Überprüfungsalgorithmus, der sich von der Berechnung selbst unterscheidet. Falls die Überprüfung ergibt, daß die Eingangsdaten während der Berechnung verändert worden sind, wird eine Weitergabe der Ausgangsdaten der Berechnung unterdrückt.

Ein Vorteil der vorliegenden Erfindung besteht darin, daß das erfindungsgemäße Konzept ohne Verwendung von Zwischenergebnissen, also z. B. den Ausgangsdaten, der Berechnung auskommen kann. Nachdem die Eingangsdaten ein sicherer Indikator dafür sind, ob eine Attacke stattgefunden hat, wird erfindungsgemäß, bevor Ausgangsdaten der Berechnung entweder an eine Ausgabe oder an eine nächste Berechnung weitergegeben werden, überprüft, ob die Eingangsdaten während der Berechnung verändert worden sind. Die Eingangsdaten werden daher als "Sensor" für eine kryptographische Attacke verwendet.

Ein Vorteil der vorliegenden Erfindung besteht darin, daß ein Überprüfungsalgorithmus eingesetzt werden kann, der wesentlich weniger aufwendig als die kryptographische Berechnung selbst sein kann, so daß der durch das "Gegenrechnen" mit dem öffentlichen Exponenten benötigte Aufwand vermieden wird.

Ein weiterer Vorteil der vorliegenden Erfindung besteht darin, daß kryptographische Attacken sicherer als beim bekannten Konzept erkannt werden, bei dem Ausgangsdaten der Hilfs-Exponentiationen benötigt werden, um eine Verifikation durchzuführen. Generell werden Konzepte, die Zwischenergebnisse einer Berechnung benötigen, lediglich feststellen können, ob während der Berechnung der Zwischenergebnisse ein Fehler aufgetreten ist, d. h. ob das innere Rechenwerk des Prozessors aufgrund einer Fehlerattacke fehlerhaft gearbeitet hat.

War die kryptographische Attacke jedoch so "schwach", daß lediglich der Speicher, nicht aber das Rechenwerk beeinträchtigt wird, so wird eine Überprüfung auf der Basis von Zwischenergebnissen diesen Fehler nicht feststellen. Sobald das Rechenwerk jedoch später auf den - nunmehr fehlerhaften - Speicher zugreift, um Parameter für eine nächste Berechnung abzurufen, wird ein Fehler auftreten, der von einem Angreifer genutzt werden kann. Ein solcher Zugriff würde beispielsweise stattfinden, wenn das Rechenwerk im Block 108 auf den Speicher zugreift, um qinv, p oder q abzurufen. Die bekannte Sicherungsmaßnahme hat keine Funktionalität mehr um einen solchen Fehler abzufangen.

Zur Überprüfung der Eingangsdaten nach der Durchführung der kryptographischen Berechnung existieren verschiedene Möglichkeiten. Eine Möglichkeit besteht darin, beim Abspeichern der Eingangsdaten eine Prüfsumme zu bilden und diese Prüfsumme ebenfalls abzuspeichern. Nach der Ausführung der kryptographischen Berechnung wird dann auf dieselbe Speicherstelle zugegriffen, um deren Inhalt wiederzugewinnen, und um mit dem Inhalt der Speicherstelle, an der die Eingangsdaten stehen sollten, eine Prüfsumme zu bilden. Entspricht die Prüfsumme der abgespeicherten Prüfsumme, so kann das Ergebnis der Berechnung ausgegeben werden. Entspricht die auf der Basis des Eingangsdaten-Speicherinhalts gebildete Prüfsumme nicht der im Speicher abgespeicherten Prüfsumme, so kann davon ausgegangen werden, daß eine kryptographische Attacke stattgefunden hat, weshalb keine Daten ausgegeben werden, sondern eine Fehlermeldung oder überhaupt nichts.

Ein weitere Alternative zum Überprüfen der Eingangsdaten, die bevorzugt wird, besteht darin, entweder beim Abspeichern der Eingangsdaten auf der Chipkarte selbst oder bei Beginn einer Berechnung die Eingangsdaten mittels eine Verarbeitungsalgorithmus zu verarbeiten, um Sicherheitsinformationen zu ermitteln, die an einer Sicherheitsinformationen-Speicherstelle gespeichert werden. Nach der Ausführung des kryptographischen Algorithmus kann dann der Inhalt der Sicherheitsinformationen-Speicherstelle wiedergewonnen werden und gemäß einem Kontrollalgorithmus verarbeitet werden. Der Kontrollalgorithmus ist so ausgestaltet, daß bei unverändertem Inhalt der Sicherheitsinformationen-Speicherstelle ein vorbestimmtes Resultat erhalten wird. Wird dieses Resultat erhalten, so kann davon ausgegangen werden, daß keine Attacke stattgefunden hat. Wird dieses Resultat jedoch nicht erhalten, so hat wahrscheinlich eine Attacke stattgefunden, und so müssen die Ausgangsdaten der Berechnung des kryptographischen Algorithmus unterdrückt werden.

Als Verarbeitungsalgorithmus bietet sich beispielsweise an, eine Zahl mit einer Ganzzahl zu multiplizieren. Der Kontrollalgorithmus, der mit diesem Verarbeitungsalgorithmus korrespondiert, besteht dann darin, eine modulare Reduktion der Sicherheitsinformationen mit der ursprünglichen Zahl durchzuführen. Als vorbestimmtes Resultat wird dann eine "0" erwartet. Selbstverständlich sind weitere Kontrollalgorithmen denkbar, die alle die Eigenschaft haben, daß sie nach einer Verarbeitung der Sicherheitsinformationen, die von den Eingangsdaten abgeleitet worden sind, und zwar bevor die Berechnung ausgeführt worden ist, ein vorbestimmtes Resultat liefern.

Bevorzugte Ausführungsbeispiele der vorliegenden Erfindung werden nachfolgend Bezug nehmend auf die beiliegenden Zeichnungen detailliert erläutert. Es zeigen:

Fig. 1 eine Blockdiagrammdarstellung des erfindungsgemäßen Konzepts;

Fig. 2a und 2b eine detailliertere Darstellung des erfindungsgemäßen Konzepts mit Prüfsummenalgorithmus gemäß einem ersten Ausführungsbeispiel der vorliegenden Erfindung;

Fig. 3a und 3b eine detailliertere Darstellung des erfindungsgemäßen Konzepts unter Verwendung eines zweiten Ausführungsbeispiels der vorliegenden Erfindung;

Fig. 4 eine detaillierte Darstellung des erfindungsgemäßen Konzepts anhand des RSA-CRT-Verfahrens; und

Fig. 5 eine Blockdiagrammdarstellung des bekannten RSA-CRT-Verfahrens.

Die erfindungsgemäße Vorrichtung zum Absichern einer Berechnung in einem kryptographischen Algorithmus umfaßt zunächst eine Einrichtung 10 zum Bereitstellen von Eingangsdaten für die Berechnung, die Teil eines kryptographischen Algorithmus ist, wie z. B. eines RSA-Algorithmus zu Zwecken der Verschlüsselung/Entschlüsselung oder Signatur/Verifikation. Die Einrichtung 10 zum Bereitstellen liefert Eingangsdaten für die Berechnung, die einer Einrichtung 12 zum Durchführen der kryptographischen Berechnung bzw. der Berechnung für eine kryptographischen Algorithmus zugeführt werden. Die Einrichtung 12 liefert Ausgangsdaten der Berechnung. Die Ausgangsdaten der Berechnung werden nunmehr, aus Sicherheitsgründen, nicht einfach beispielsweise ausgegeben oder einer weiteren Berechnung zugeführt, sondern so lange verzögert, bis eine Einrichtung 14 zum Überprüfen einer Veränderung in den Eingangsdaten festgestellt hat, ob eine kryptographische Attacke stattgefunden hat oder nicht.

Die Einrichtung 14 führt diese Überprüfung anhand der Eingangsdaten durch. Hat sich am Zustand der Eingangsdaten vor der Ausführung der kryptographischen Berechnung im Vergleich zu nach der Ausführung der kryptographischen Berechnung nichts verändert, so wird davon ausgegangen, daß keine Attacke stattgefunden hat, so daß die Ausgangsdaten am Ausgang der Einrichtung 12 beispielsweise an eine Anzeige ausgegeben werden können, oder einer weiteren Berechnung als Eingangsdaten zugeführt werden können.

Stellt die Einrichtung 14 jedoch fest, daß sich die Eingangsdaten verändert haben, so wird eine Einrichtung 16 aktiviert, um die Ausgangsdaten zu unterdrücken. Je nach Ausführungsform kann neben einer Unterdrückung der Ausgangsdaten eine Fehlermeldung ausgegeben werden. Alternativ könnte jedoch auch keine Ausgabe stattfinden.

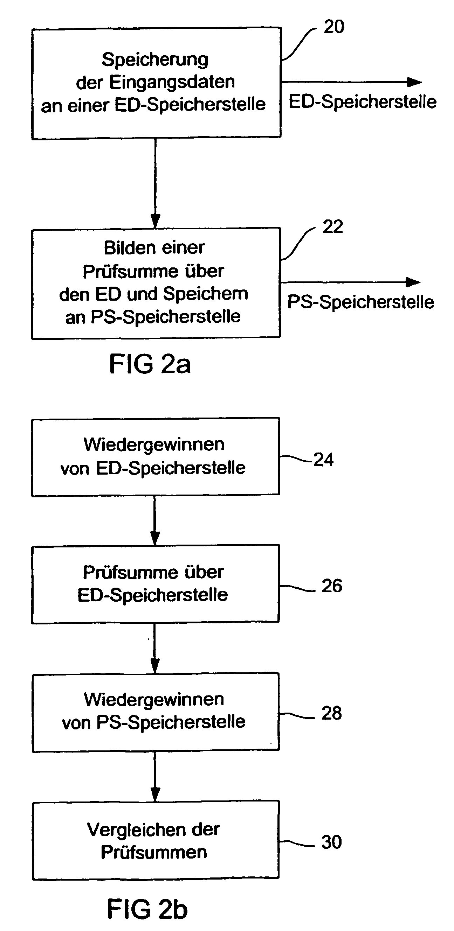

Die Fig. 2a und 2b zeigen eine detailliertere Darstellung eines ersten Ausführungsbeispiels der vorliegenden Erfindung, das auf einem Prüfsummenalgorithmus basiert. In einem Block 20 werden zunächst Eingangsdaten für eine Berechnung eines kryptographischen Algorithmus, wie z. B. die in Fig. 5 dargestellte RSA-CRT-Berechnung, an einer Eingangsdaten-Speicherstelle eines Kryptographieprozessors gespeichert. Daraufhin wird, beispielsweise bereits beim ersten Einspeichern der Daten auf der Karte, eine Prüfsumme, beispielsweise eine CRT-Prüfsumme, über den Eingangsdaten gebildet, woraufhin die Prüfsumme an einer Prüfsummen-Speicherstelle des Kryptographieprozessors gespeichert wird (Block 22).

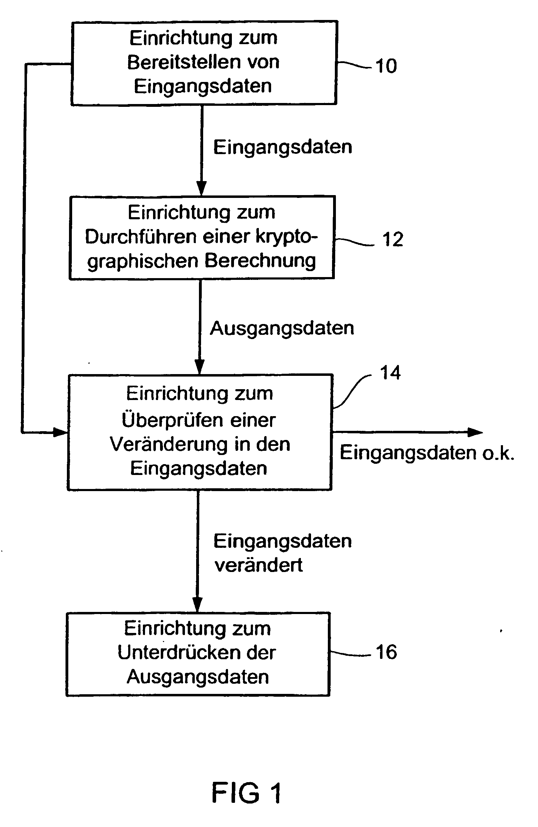

Die Einrichtung 14 von Fig. 1 wird dann, wie es in Fig. 2b dargestellt ist, ausgestaltet sein, um nach einer Durchführung der Berechnung des kryptographischen Algorithmus auf die Eingangsdaten-Speicherstelle zuzugreifen, um den Inhalt der Eingangsdaten-Speicherstelle wiederzugewinnen (Block 24). Dann wird, wie es durch einen Block 26 dargestellt ist, eine Prüfsumme über den wiedergewonnenen Inhalt der Eingangsdaten-Speicherstelle gebildet, wobei derselbe Algorithmus wie im Block 22 verwendet wird. Am Ausgang des Blocks 26 liegt somit eine aktuell berechnete Eingangsdaten-Prüfsumme vor. Durch einen Block 28 wird dann auf die an der Prüfsummen-Speicherstelle durch den Block 22 (Fig. 2a) gespeicherte Prüfsumme zugegriffen. In einem Block 30 werden schließlich die gespeicherte Prüfsumme und die aktuell berechnete Prüfsumme (durch den Block 26 berechnet) miteinander verglichen. Werden Differenzen festgestellt, so kann davon ausgegangen werden, daß die Eingangsdaten während des Durchführens der Berechnung des kryptographischen Algorithmus korrumpiert worden sind, was wiederum ein Indiz für eine Fehlerattacke ist. Daher werden die Ausgangsdaten unterdrückt. Wird keine Differenz in den Prüfsummen festgestellt, so wird davon ausgegangen, daß keine Attacke stattgefunden hat, so daß die Ausgangsdaten ausgegeben werden können, oder an eine weitere kryptographische Berechnung als Eingangsdaten übermittelt werden können.

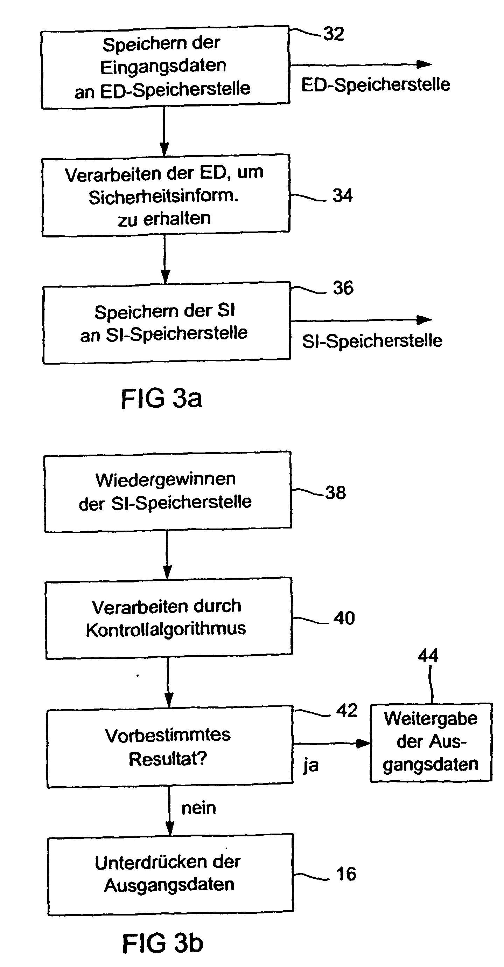

Im nachfolgenden wird anhand der Fig. 3a und 3b ein alternatives Ausführungsbeispiel zum Überprüfen einer Veränderung in den Eingangsdaten einer Berechnung eines kryptographischen Algorithmus dargestellt. Zunächst werden, wie bei dem in Fig. 2a gezeigten Ausführungsbeispiel, die Eingangsdaten an einer Eingangsdaten-Speicherstelle gespeichert (Block 32). Im Gegensatz zu dem in Fig. 2a gezeigten Ausführungsbeispiel, bei dem eine Prüfsumme berechnet wurde, wird nun eine Verarbeitung der Eingangsdaten mittels eines Verarbeitungsalgorithmus durchgeführt, um Sicherheitsinformationen zu erhalten (Block 34). In einem Block 36 werden dann die durch den Block 34 berechneten Sicherheitsinformationen an einer Sicherheitsinformationen-Speicherstelle des Kryptoprozessors abgespeichert.

Zur Überprüfung wird nunmehr folgendermaßen vorgegangen. Zunächst werden, wie es in einem Block 38 von Fig. 3b gezeigt ist, die an der Sicherheitsinformationen-Speicherstelle stehenden Informationen wiedergewonnen. Diese Informationen werden dann in einem Block 40 mittels eines Kontrollalgorithmus verarbeitet, wobei der Kontrollalgorithmus so ausgestaltet ist, daß er bei unverändertem Inhalt der Sicherheitsinformationen-Speicherstelle ein vorbestimmtes Resultat liefert. In einem Block 42 wird überprüft, ob die Verarbeitung durch den Kontrollalgorithmus in dem Block 40 zu dem vorbestimmten Resultat geführt hat. War dies der Fall, so werden die Ausgangsdaten weitergegeben, wie es durch einen Block 44 dargestellt ist. Wird dagegen festgestellt, daß die Verarbeitung durch den Kontrollalgorithmus 40 nicht zu dem vorbestimmten Resultat geführt hat, werden die Ausgangsdaten unterdrückt (Block 16).

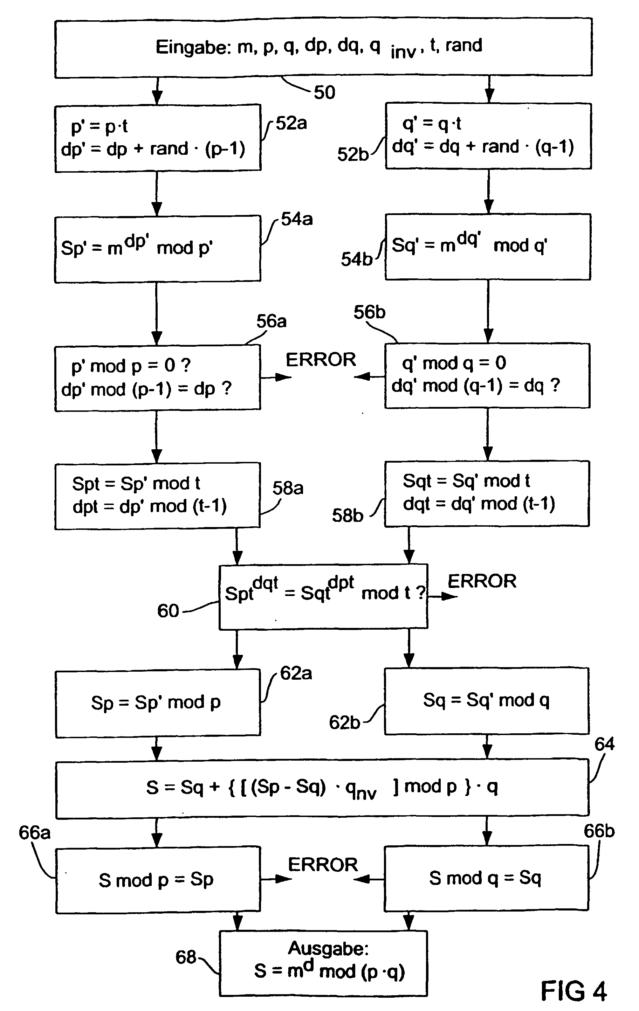

Im nachfolgenden wird anhand von Fig. 4 ein bevorzugtes Ausführungsbeispiel zum sicheren Ausführen des RSA-CRT-Verfahrens beschrieben, bei dem das erfindungsgemäße Konzept des Überprüfens der Eingangsdaten vor der Ausgabe von Ausgangsdaten eines kryptographischen Algorithmus an mehreren Stellen innerhalb des Algorithmus eingesetzt wird.

Des weiteren wird bei dem in Fig. 4 gezeigten Ausführungsbeispiel auch die Berechnung des kryptographischen Algorithmus selbst, und zwar insbesondere die Berechnung der beiden Hilfs-Exponentiationen überprüft. Schließlich wird bei dem in Fig. 4 gezeigten Ausführungsbeispiel auch überprüft, ob das "Zusammensetzen" der beiden Ergebnisse der Hilfs-Exponentiationen, um die signierte Nachricht s zu erhalten, korrekt stattgefunden hat.

Zunächst werden, wie es bereits anhand von Fig. 5 dargestellt worden ist, die Parameter p, q, dp, dq, qinv bereitgestellt, die die üblichen Eingabeparameter für das RSA-CRT-Verfahren sind. Ferner werden, wie es in einem Block 50 von Fig. 4 dargestellt ist, die zu verschlüsselnde Nachricht m sowie eine Zahl t und eine Zufallszahl rand als Eingangsdaten bereitgestellt. Die Zahl t ist vorzugsweise eine Primzahl, und vorzugsweise eine kleine Primzahl, welche beispielsweise nicht länger als 16 Bits ist, um den Vorteil des CRT-Verfahrens nicht zu stark zu schmälern, nämlich daß die beiden Hilfs-Exponentiationen mit kleinerem Modul im Vergleich zu einer einzigen modularen Exponentiation mit dem Modul n = p mal q stattfinden. Ist die Zahl t keine Primzahl, so ist dieser Fall ebenfalls möglich, in den Gleichungen müßte jedoch dann der Ausdruck (t-1) durch die Eulersche Phi-Funktion von t ersetzt werden.

Wie es anhand von Fig. 3a dargestellt ist, werden zunächst Eingangsdaten in Blöcken 52a, 52b verarbeitet. Als Verarbeitungsalgorithmus wird die Multiplikation des ursprünglichen Parameters p bzw. q mit der Primzahl t verwendet. Ferner wird als Verarbeitungsvorschrift die Addition von dp mit dem Produkt aus der Zufallszahl rand und der Zahl (p-1) bzw. entsprechend für q verwendet.

Es sei darauf hingewiesen, daß prinzipiell auch eine einzige der vier in den Blöcken 52a, 52b gegebenen Verarbeitungsvorschriften einen erfindungsgemäßen Effekt ergeben würde. Nach der Vollendung der Blöcke 52a, 52b werden die durch die Verarbeitung erhaltenen Sicherheitsinformationen p', dp', q' und dq' an einer Sicherheitsinformationen-Speicherstelle gespeichert. Diese Speicherstelle könnte beispielsweise der Arbeitsspeicher eines Kryptoprozessors sein, oder ein inneres Register, das dem Rechenwerk des Kryptoprozessors zugeordnet ist. Dann wird durch das Rechenwerk, wie es durch Blöcke 54a, 54b dargestellt ist, als Berechnung innerhalb des kryptographischen Algorithmus sowohl die erste Hilfs-Exponentiation (sp') als auch die zweite Hilfs-Exponentiation (sq') durchgeführt, wie es in Fig. 4 gezeigt ist. Nach dem Durchführen der Blöcke 54a, 54b werden die Ausgangsdaten der Berechnungen, nämlich sp' und sq' nicht unmittelbar entweder ausgegeben bzw. für eine weitere Berechnung weitergegeben, sondern es wird erfindungsgemäß zunächst in Blöcken 56a, 56b mittels eines Kontrollalgorithmus überprüft, ob die Eingangsdaten für die Berechnung in den Blöcken 54a, 54b während der Berechnung durch die Blöcke 54a, 54b verändert worden sind. Hierzu wird als Kontrollalgorithmus eine modulare Reduktion verwendet, wobei als vorbestimmtes Ergebnis entweder 0 erwartet wird, wie es in den ersten Zeilen der beiden Blöcke 56a, 56b dargestellt ist, oder entweder dp oder dq als vorbestimmtes Resultat erwartet wird. Das vorbestimmte Resultat ergibt sich, wenn die Größe p', die in der Terminologie der vorliegenden Erfindung die Sicherheitsinformation ist, nicht beispielsweise durch eine Fehlerattacke verändert worden ist. Dasselbe gilt für die weitere Sicherheitsinformation dp'.

Sind die Überprüfungen in den Blöcken 56a, 56b erfolgreich, also werden vorbestimmte Ergebnisse durch den Kontrollalgorithmus erhalten, so wird zu Blöcken 58a, 58b weitergegangen. Die Blöcke 58a, 58b zeigen bevorzugte Vorberechnungen, um neben dem Eingangsdaten-Überprüfungskonzept auch ein Ergebnisdaten-Überprüfungskonzept durchzuführen. Mittels eines Ergebnis-Kontrollalgorithmus (Block 60 in Fig. 4) wird dann überprüft, ob die Berechnung der Hilfs-Exponentiationen in den Blöcken 54a, 54b korrekt stattgefunden hat.

In Blöcken 62a, 62b werden die Hilfs-Exponentiationen der Blöcke 54a, 54b entsprechend modular reduziert, um den Einfluß des Parameters t bzw. der Zufallszahl zu eliminieren. In einem Block 64 wird schließlich, wie es anhand des Blocks 108 von Fig. 5 klargestellt worden ist, der Zusammensetzungsschritt ausgeführt, um aus den Hilfs-Exponentiationsergebnisse sp, sq die signierte Nachricht s zu erzeugen.

Bei einem bevorzugten Ausführungsbeispiel der vorliegenden Erfindung wird dieses Ergebnis jedoch nicht unmittelbar verwendet, sondern es wird nach dem Zusammensetzen durch den Block 64 eine Überprüfung dahingehend durchgeführt, ob das Zusammensetzen erfolgreich war.

Dies wird dadurch erreicht, daß zunächst die erhaltene signierte Nachricht s unter Verwendung der Primzahl p als Modul modular reduziert wird. Dieser Kontrollalgorithmus sollte als Ergebnis sp ergeben, wobei dieses sp gleich dem im Block 62a ausgerechneten Wert sp sein muß.

Analog wird in einem Block 66b vorgegangen, um die Korrektheit des Ergebnisses s auch anhand einer modularen Reduktion mit der Primzahl q als Modul zu überprüfen. Hierzu wird zur Ausführung der in Block 66a gegebenen Berechnung zunächst auf die Zwischenspeicherstelle zugegriffen, an der das Ergebnis des Blocks 64 abgespeichert wurde. Zusätzlich wird auf die Speicherstelle zugegriffen, an der das Eingangsdatum p gespeichert ist. Schließlich wird, um den Vergleich des Blocks 66a durchzuführen, auf die Speicherstelle zugegriffen, in der das Ergebnis des Blocks 62a, also sp, gespeichert ist. Analog wird im Block 66b für s, q und sq vorgegangen.

Liefert die Berechnung im Block 66a ein vorbestimmtes Resultat dahingehend, daß die linke und die rechte Seite der im Block 66a gegebenen Gleichung nicht gleich sind, so wird ein Fehler ausgegeben, und die Ausgabe des Ergebnisses s des Blocks 64 wird unterdrückt. Dieselbe Unterdrückung des Ergebnisses s findet statt, wenn die Berechnung im Block 66b ergibt, daß ein Fehler stattgefunden hat. Eine Unterdrückung findet somit vorzugsweise bereits dann statt, wenn ein einziger Block einen Fehler ergeben hat bzw., in anderen Worten ausgedrückt, findet eine Ergebnisausgabe mittels eines Blocks 68 nur dann statt, wenn sowohl die Berechnung im Block 66a als auch die Berechnung im Block 66b korrekt waren.

Anhand des Beispiels in Block 66a wird deutlich, daß dieser Ergebnis-Kontrollalgorithmus dahingehend vorteilhaft ist, daß er unmittelbar das Ergebnis des Blocks 64 zur Überprüfung verwendet, daß er jedoch auch auf den Eingangsdaten-Speicherbereich zugreift, um die Primzahl p zu erhalten bzw. den Inhalt der Speicherstelle, an der p stehen sollte, und daß zusätzlich auch ein Zwischenergebnis verwendet wird, nämlich sp, das im Schritt 62a erhalten worden ist. Mittels einer Berechnung wird somit sowohl überprüft, ob sich Eingangsdaten verändert haben, als auch wird überprüft, ob der Zusammensetzungsschritt 64 des RSA-CRT-Verfahrens von dem Krypto-Rechenwerk korrekt durchgeführt worden ist. Schließlich wird auch ein Zwischenergebnis sp verwendet, so daß in eine einzige einfache Berechnung auch Zwischenergebnis-Register mit einbezogen werden.

Aus dem in Fig. 4 gezeigten Ausführungsbeispiel wird deutlich, daß sowohl der Verarbeitungsalgorithmus, um die Sicherheitsinformationen zu erzeugen, als auch der Kontrollalgorithmus zum Überprüfen der Eingangsdaten einfache Algorithmen sind, die ohnehin in einem Krypto-Rechenwerk vorhanden sind, wie z. B. ein Multiplikationsalgorithmus oder ein Algorithmus zur Durchführung einer modularen Reduktion. Dasselbe trifft zu für die Verarbeitungsalgorithmen in den Blöcken 62a, 62b, die ebenfalls auf einer modularen Reduktion basieren, und auch für den Kontrollalgorithmus in den Blöcken 66a, 66b, der wiederum auf einer modularen Reduktion basiert.

Obgleich in dem vorhergehenden in Fig. 4 gezeigten Ausführungsbeispiel als Verarbeitungsalgorithmus die Multiplikation einer Zahl mit einer Konstanten, und als - dazu korrespondierender - Kontrollalgorithmus die modulare Reduktion des Multiplikationsergebnisses mit der ursprünglichen Zahl dargestellt worden sind, ist es für Fachleute offensichtlich, daß eine Vielzahl von miteinander korrespondierenden Verarbeitungsalgorithmen und Kontrollalgorithmen existiert, die es ermöglichen, zu überprüfen, ob Eingangsdaten während der Durchführung einer Berechnung in einem kryptographischen Algorithmus z. B. durch Fehlerattacken verändert worden sind.

Aus Fig. 4 wird ferner deutlich, daß die Verarbeitungsalgorithmen genauso wie die Kontrollalgorithmen sehr einfach gestaltet werden können, und keine zusätzlichen Parameter benötigen, als die ohnehin vorhandenen Parameter. Insbesondere wird es erfindungsgemäß bevorzugt, nicht zusätzliche Parameter, wie z. B. den öffentlichen Schlüssel e, zunächst aufwendig zu berechnen und dann für eine "Gegenrechnung" zu verwenden, sondern möglichst viele Eingangsdaten, Zwischenergebnisdaten etc. miteinander zu verknüpfen, da damit mittels eines einzigen Überprüfungsschritts mögliche Fehler im Arbeitsspeicher, in den inneren Registern oder in dem Rechenwerk selbst detektiert werden können, um im Falle eines Fehlers eine Datenausgabe zu unterdrücken, damit keine geheimen Informationen aus einer falschen Ausgabe ermittelbar sind.

Bezugszeichenliste

| | |
|---|---|
| 10 | Einrichtung zum Bereitstellen von Eingangsdaten |
| 12 | Einrichtung zum Durchführen einer kryptographischen Berechnung |
| 14 | Einrichtung zum Überprüfen einer Veränderung in den Eingangsdaten |
| 16 | Einrichtung zum Unterdrücken der Ausgangsdaten |
| 20 | Speichern der Eingangsdaten an einer Eingangsdaten-Speicherstelle |
| 22 | Bilden einer Prüfsumme und Speichern |
| 24 | Wiedergewinnen von der Eingangsdaten-Speicherstelle |
| 26 | Bilden einer Prüfsumme über den Eingangsdaten-Speicherstellen-Inhalt |
| 28 | Wiedergewinnen des Inhalts der Prüfsummen-Speicherstelle |
| 30 | Vergleichen der Prüfsummen |
| 32 | Speichern der Eingangsdaten an der Eingangsdaten-Speicherstelle |
| 34 | Verarbeiten der Eingangsdaten, um Sicherheitsinformationen zu erhalten |
| 36 | Speichern der Sicherheitsinformationen an der Sicherheitsinformationen-Speicherstelle |
| 38 | Wiedergewinnen des Inhalts der Sicherheitsinformationen-Speicherstelle |
| 40 | Verarbeiten durch eine Kontrollalgorithmus |
| 42 | Überprüfen hinsichtlich des vorbestimmten Resultats |
| 44 | Weitergabe der Ausgangsdaten |
| 50 | Eingangsdaten für RSA-CRT-Algorithmus |
| 52a, 52b | Verarbeiten der Eingangsdaten um Sicherheitsinformationen zu erhalten |
| 54a, 54b | Rechnung des kryptographischen Algorithmus |
| 56a, 56b | Verarbeiten der Sicherheitsinformationen mittels Kontrollalgorithmus und Überprüfen, ob vorbestimmtes Resultat erreicht ist |
| 58a, 58b | Ergebnis-Kontrollalgorithmus |
| 60 | Überprüfen mittels Ergebnis-Kontrollalgorithmus |
| 62, 62b | Reduzieren von sp' bzw. sq' |
| 64 | Zusammenfügungsalgorithmus |
| 66a, 66b | erster Teil und zweiter Teil des Prüfalgorithmus |
| 68 | Ausgabe der digitalen Signatur s |
| 100 | Eingangsdaten in das RSA-CRT-Verfahren |
| 102 | Ausgangsdaten des RSA-CRT-Verfahrens |
| 104 | Berechnen einer ersten Hilfs-Exponentiation |
| 106 | Berechnen einer zweiten Hilfs-Exponentiation |
| 108 | Zusammenfügen der ersten und der zweiten Hilfs-Exponentiation |

**Patentansprüche**

1. Rechnergestutztes Verfahren zum Absichern einer Berechnung in einem kryptographischen Algorithmus gegenüber einer Fehlerattacke auf einen Kryptoprozessor, der den kryptographischen Algorithmus ausführt, wobei die Berechnung Eingangsdaten erhält, um Ausgangsdaten zu erzeugen, mit folgenden Schritten:

   Bereitstellen (10) der Eingangsdaten für die Berechnung an einer Eingangsdaten-Speicherstelle;

Durchführen (12) der Berechnung unter Verwendung der bereitgestellten Eingangsdaten durch den Kryptoprozessor, um die Ausgangsdaten der Berechnung zu erhalten;

nach dem Durchführen der Berechnung in dem Kryptoprozessor, Zugreifen auf die Eingangsdaten-Speicherstelle, um einen Inhalt der Eingangsdaten-Speicherstelle zu erhalten, Überprüfen (14) unter Verwendung des Inhalts der Eingangsdaten-Speicherstelle, ob die Eingangsdaten während der Berechnung verändert wurden, unter Verwendung eines Überprüfungsalgorithmus, der sich von der Berechnung unterscheidet; und

falls das Überprüfen (14) ergibt, dass die Eingangsdaten an der Eingangsdaten-Speicherstelle während der Berechnung durch den Kryptoprozessor verändert wurden, Unterdrükken (16) einer Weitergabe der Ausgangsdaten der Berechnung.

2. Verfahren nach Anspruch 1, bei dem im Schritt des Bereitstellens der Eingangsdaten die Eingangsdaten an einer Eingangsdaten-Speicherstelle gespeichert werden (20),
bei dem ferner eine Prüfsumme über zumindest einen Teil der Eingangsdaten erzeugt und an einer Prüfsummen-Speicherstelle gespeichert wird (22); und
bei dem der Überprüfungsalgorithmus folgende Teilschritte aufweist
Wiedergewinnen (24) eines Inhalts der Eingangsdaten-Speicherstelle;
Erzeugen (26) einer Prüfsumme über zumindest einen Teil des wiedergewonnen Inhalts;
Wiedergewinnen (28) eines Inhalts der Prüfsummen-Speicherstelle; und
Vergleichen (30) der erzeugten Prüfsumme mit dem wiedergewonnenen Inhalt der Prüfsummen-Speicherstelle; und
bei dem die Weitergabe (16) der Ausgangsdaten unterdrückt wird, falls der Vergleich eine Abweichung ergibt.

3. Verfahren nach Anspruch 1,
bei dem im Schritt des Bereitstellens die Eingangsdaten an einer Eingangsdaten-Speicherstelle gespeichert werden (32);
bei dem zumindest ein Teil der Eingangsdaten gemäß einem Verarbeitungsalgorithmus verarbeitet werden (34), um Sicherheitsinformationen zu erhalten, wobei die Sicherheitsinformationen an einer Sicherheitsinformationen-Speicherstelle gespeichert werden (36);
bei dem der Überprüfungsalgorithmus folgende Schritte aufweist:

Wiedergewinnen (38) zumindest eines Teils des Inhalts der Sicherheitsinformationen-Speicherstelle;

Verarbeiten (40) des Inhalts der Sicherheitsinformationen-Speicherstelle mittels eines Kontrollalgorithmus, wobei der Kontrollalgorithmus so ausgestaltet ist, dass er bei unverändertem Inhalt der Sicherheitsinformationen-Speicherstelle ein vorbestimmtes Resultat liefert (42); und

bei dem die Weitergabe der Ausgangsdaten unterdrückt wird (16), falls der Kontrollalgorithmus ein von dem vorbestimmten Resultat abweichendes Resultat liefert.

4. Verfahren nach einem der Ansprüche 1 bis 3,
bei dem der kryptographische Algorithmus eine weitere Berechnung umfaßt, und
bei dem die Sicherheitsinformationen für die weitere Berechnung als Eingangsdaten zur Verfügung gestellt werden, falls der Überprüfungsalgorithmus das vorbestimmte Resultat liefert.

5. Verfahren nach Anspruch 3 oder 4,
bei dem der Überprüfungsalgorithmus ferner einen Schritt des Zugreifens auf die Eingangsdaten-Speicherstelle aufweist, um zumindest einen Teil des Inhalts der Eingangsdaten-Speicherstelle wiederzugewinnen, und
bei dem der Kontrollalgorithmus angeordnet ist, um ferner zumindest den Teil des Inhalts der Eingangsdaten-Speicherstelle zu verwenden.

6. Verfahren nach einem der Ansprüche 3 bis 5,
bei dem der Verarbeitungsalgorithmus, um die Sicherheitsinformationen zu erzeugen, ein Multiplizieren einer Eingangsgröße, die einen Teil der Eingangsdaten darstellt, mit einer ganzen Zahl umfaßt;
bei dem der Kontrollalgorithmus ein modulares Reduzieren des Inhalts der Sicherheitsinformationen-Speicherstelle mit der Eingangsgröße als Modul umfaßt, und
bei dem das vorbestimmte Resultat "0" ist.

7. Verfahren nach einem der Ansprüche 3 bis 6,
bei dem der Verarbeitungsalgorithmus ein Summieren einer ersten Eingangsgröße und eines Produkts aus einer Zufallszahl und einer zweiten Eingangsgröße weniger 1 umfaßt;
bei dem der Kontrollalgorithmus ein modulares Reduzieren des Inhalts der Sicherheitsinformationen-Speicherstelle mit der zweiten Eingangsgröße weniger 1 als Modul umfaßt;
bei dem das vorbestimmte Resultat die erste Eingangsgröße ist.

8. Verfahren nach einem der vorhergehenden Ansprüche, bei dem der kryptographische Algorithmus eine modulare Exponentiation für den RSA-Algorithmus mit chinesischem Restsatz (CRT) ist.

9. Verfahren nach Anspruch 8, bei dem als Eingangsdaten m, p, q, dp, dq, qinv, t und rand bereitgestellt werden, wobei m eine zu verarbeitende Klartext-Nachricht ist, wobei p und q eine erste und eine zweite Primzahl darstellen, deren Produkt gleich einem Modul n ist, wobei dp ein erster Hilfs-Exponent ist, wobei dq ein zweiter Hilfs-Exponent ist, wobei qinv gleich $q^{-1}$ mod p ist, wobei t eine Primzahl ist, und wobei rand eine Zufallszahl ist.

10. Verfahren nach Anspruch 9, bei dem der Verarbeitungsalgorithmus folgendermaßen ausgestaltet ist:

$$p' = p \cdot t;$$

$$dp' = dp + rand \cdot (p-1);$$

$$q' = q \cdot t;$$

und/oder

$$dq' = dq + rand \cdot (q-1),$$

und
bei dem der Kontrollalgorithmus folgendermaßen ausgestaltet ist:

$$p' \bmod p = 0;$$

$$q' \bmod q = 0;$$

$$dp' \bmod (p-1) = dp;$$

und/oder

$$dq' \bmod (q-1) = dq;$$

und
bei dem die kryptographische Berechnung folgendermaßen lautet:

$$sp' = m^{dp'} \bmod p';$$

oder

$$sq' = m^{dq'} \bmod q',$$

wobei p', q', dp', dq' Sicherheitsinformationen sind,
wobei dp, dq und 0 vorbestimmte Resultate sind, und
wobei sp', sq' Ausgangsdaten der Berechnung des kryptographischen Algorithmus sind.

11. Verfahren nach einem der vorhergehenden Ansprüche das ferner folgenden Schritt aufweist:

Durchführen eines Ergebnis-Kontrollalgorithmus mit einem Ergebnis der Berechnung des kryptographischen Algorithmus und einem Inhalt der Eingangsdaten-Speicherstelle, wobei sich der Ergebnis-Kontrollalgorithmus von der Berechnung unterscheidet und ein vorbestimmtes Resultat liefert, wenn die Eingangsdaten-Speicherstelle einen unveränderten Inhalt hat, und wenn die kryptographische Berechnung korrekt ausgeführt worden ist; und

Unterdrücken der Weitergabe, wenn der Ergebnis-Kontrollalgorithmus ein von dem vorbestimmten Resultat abweichendes Resultat liefert.

12. Verfahren nach Anspruch 11, bei dem die Berechnung folgendermaßen lautet:

$$sp' = m^{dp'} \bmod p';$$

und/oder

$$sq' = m^{dq'} \bmod q';$$

bei dem der Ergebnis-Kontrollalgorithmus folgendermaßen lautet:

$$spt = sp' \bmod t;$$

$$sqt = sq' \bmod t;$$

$$dpt = dp' \bmod(t-1);$$

$$dqt = dq' \bmod(t-1);$$

$$spt^{dqt} = sqt^{dpt} \bmod t ,$$

und
wobei das vorbestimmte Resultat eine Gleichheit ist.

13. Verfahren nach Anspruch 11, bei dem der kryptographische Algorithmus eine modulare Exponentiation für den RSA-Algorithmus mit chinesischem Restsatz (CRT) aufweist,
bei dem die Berechnung folgendermaßen gegeben ist:

$$s = sq + \{[(sp - sq) \cdot qinv] \bmod p\} \cdot q ;$$

und
bei dem der Ergebnis-Kontrollalgorithmus folgendermaßen lautet:

$$s \bmod p = sp;$$

und/oder

$$s \bmod q = sq,$$

wobei das vorbestimmte Resultat eine Gleichheitsbedingung ist.

14. Rechnergestutzte Vorrichtung zum Absichern einer Berechnung in einem kryptographischen Algorithmus gegenüber einer Fehlerattacke auf einen Kryptoprozessor, der den kryptographischen Algorithmus ausführt, wobei die Berechnung Eingangsdaten erhält, um Ausgangsdaten zu erzeugen, und wobei besagte Vorrichtung die folgenden Merkmale enthält;
eine Einrichtung zum Bereitstellen (10) der Eingangsdaten für die Berechnung an einer Eingangsdaten-Speicherstelle;
eine Einrichtung zum Durchführen (12) der Berechnung unter Verwendung der bereitgestellten Eingangsdaten durch den Kryptoprozessor, um die Ausgangsdaten der Berechnung zu erhalten;
eine Einrichtung zum Überprüfen (14), ob die Eingangsdaten während der Berechnung verändert wurden, durch Zugreifen auf die Eingangsdaten-Speicherstelle, um einen Inhalt der Eingangsdaten-Speicherstelle zu erhalten, und unter Verwendung sowohl eines Überprüfungsalgorithmus, der sich von der Berechnung unterscheidet, als auch des Inhalts der Eingangsdaten-Speicherstelle, wobei besagte Einrichtung zum Überprüfen weiter Mittel zum Durchführen der besagten Überprüfungsalgorithmus, nachdem die Berechnung in dem Kryptoprozessor durchgeführt worden ist, enthält und eine Einrichtung zum Unterdrücken (16) einer Weitergabe der Ausgangsdaten, falls die Einrichtung (14) zum überprüfen ermittelt, dass die Eingangsdaten an der Eingangsdaten-Speicherstelle während der Berechnung durch den Kryptoprozessor verändert wurden.

## Claims

1. Computer-aided method for protecting a calculation in a cryptographic algorithm against an error attack on a crypto-processor performing the cryptographic algorithm, the calculation obtaining input data to produce output data, the method comprising:

   providing (10) the input data for the calculation at an input data memory location;

   performing (12) the calculation, using the input data provided, by the crypto-processor to obtain the output data of the calculation;

   after the performance of the calculation in the crypto-processor, accessing the input data memory location to obtain a content of the input data memory location, verifying (14), using the content of the input data memory location, whether the input data was changed during the calculation by using a verification algorithm which differs from the calculation; and

   if the verification (14) proves that the input data at the input data memory location were changed during the calculation by the crypto-processor, suppressing (16) a forwarding of the output data of the calculation.

2. Method as claimed in claim 1, wherein in the step of providing the input data, the input data is stored at an input data memory location (20);
   wherein further a checksum on at least part of the input data is formed and stored at a checksum memory location (22); and
   wherein the verification algorithm comprises the following sub-steps:

   retrieving (24) contents of the input data memory location;

   forming (26) a checksum on at least part of the contents retrieved;

   retrieving (28) of contents of the checksum memory location; and

   comparing (30) the checksum formed with the retrieved contents of the checksum memory location; and

wherein the forwarding (16) of the output data is suppressed if the comparison shows a deviation.

3. Method as claimed in claim 1,
   wherein in the provision step the input data is stored at an input data memory location (32);
   wherein at least part of the input data is processed in accordance with a processing algorithm (34) to obtain security information, the security information being stored at a security information memory location (36);
   wherein the verification algorithm comprises:

   retrieving (38) at least part of the contents of the security information memory location;

   processing (40) of the contents of the security information memory location by means of a check algorithm, the check algorithm being designed such that it provides a predetermined result if the contents of the security information memory location is unchanged (42); and

   wherein the forwarding of the output data is suppressed (16) if the check algorithm provides a result which deviates from the predetermined result.

4. Method as claimed in any one of claims 1 to 3,
   wherein the cryptographic algorithm includes a further calculation, and
   wherein the security information are made available as input data for the further calculation if the verification algorithm provides the predetermined result.

5. Method as claimed in claim 3 or 4,
   wherein the verification algorithm further comprises a step of accessing the input data memory location to retrieve at least part of the contents of the input data memory location, and
   wherein the check algorithm is arranged to further use at least part of the contents of the input data memory location.

6. Method as claimed in any one of claims 3 to 5,
   wherein the processing algorithm for creating the security information includes multiplying an input quantity, which represents part of the input data, with an integer;
   wherein the check algorithm includes a modular reduction of the contents of the security information memory location with the input quantity as the module; and
   wherein the predetermined result is "0".

7. Method as claimed in any one of claims 3 to 6, wherein the processing algorithm includes summing a first input quantity and a product of a random number and of a second input quantity less 1;
wherein the check algorithm includes a modular reduction of the contents of the security information memory location with the second input quantity less 1 as the module;
wherein the predetermined result is the first input quantity.

8. Method as claimed in any one of the preceding claims, wherein the cryptographic algorithm is a modular exponentiation for the RSA algorithm with the Chinese remainder theorem (CRT).

9. Method as claimed in claim 8, wherein m, p, q, dp, dq, qinv, t and rand are provided as the input data, wherein m is a plain-text message to be processed, wherein p and q represent first and second prime numbers, the product of which is equal to a module n, wherein dp is a first auxiliary exponent, wherein dq is a second auxiliary exponent, wherein qinv equals $q^{-1}$ mod p, wherein t is a prime number, and wherein rand is a random number.

10. Method as claimed in claim 9, wherein the processing algorithm is implemented as follows:

$$p' = p \cdot t;$$

$$dp' = dp + rand \cdot (p\text{-}1);$$

$$q' = q \cdot t \text{ ; and/or}$$

$$dq' = dq + rand \cdot (q\text{-}1),$$

and
wherein the check algorithm is implemented as follows:

$$p' \bmod p = 0;$$

$$q' \bmod q = 0 ;$$

$$dp' \bmod (p\text{-}1) = dp;$$

and/or

$$dq' \bmod (q\text{-}1) = dq;$$

and
wherein the cryptographic calculation is as follows:

$$sp' = m^{dp'} \bmod p';$$

or

$$sq' = m^{dq'} \bmod q';$$

wherein p', q', dp', dq' are security information, wherein dp, dq and 0 are predetermined results, and
wherein sp', sq' are output data of the calculation of the cryptographic algorithm.

11. Method as claimed in any one of the preceding claims, further comprising:

    performing a result check algorithm with a result of the calculation of the cryptographic algorithm and with contents of the input data memory location, the result check algorithm differing from the calculation and providing a predetermined result if the input data memory location comprises unchanged contents and if the cryptographic calculation has been performed correctly; and

    suppressing the forwarding if the result check algorithm provides a result which deviates from the predetermined result.

12. Method as claimed in claim 11, wherein the calculation is as follows:

$$sp' = m^{dp'} \bmod p';$$

and/or

$$sq' = m^{dq'} \bmod q';$$

wherein the result check algorithm is as follows:

$$spt = sp' \bmod t;$$

$$sqt = sq' \bmod t;$$

$$dpt = dp' \bmod (t-1);$$

$$dqt = dq' \bmod (t-1);$$

$$spt^{dqt} = sqt^{dpt} \bmod t;$$

and
wherein the predetermined result is a equality.

13. Method as claimed in claim 11, wherein the cryptographic algorithm comprises a modular exponentiation for the RSA algorithm with the Chinese remainder theorem (CRT),
wherein the calculation is given as follows:

$$s = sq + \{[(sp-sq) \cdot qinv] \bmod p\} \cdot q;$$

and
wherein the result check algorithm is as follows:

$$s \bmod p = sp;$$

and/or

$$s \bmod q = sq,$$

wherein the predetermined result is an equality condition.

14. Computer-aided apparatus for protecting a calculation in a cryptographic algorithm against an error attack on a crypto-processor performing the cryptographic algorithm, the calculation obtaining input data to produce output data, and said apparatus comprising the following features:

    means for providing (10) the input data for the calculation at an input data memory location;

    means for performing (12) the calculation, using the input data provided, by the crypto-processor to obtain the output data of the calculation;

    means for verifying (14) whether the input data was changed during the calculation, by accessing the input data memory location to obtain a content of the input data memory location, and using both a verification algorithm, which differs from the calculation, and the content of the input data memory location, said means for verifying containing further means for performing said verification algorithm, after the calculation has been performed in the crypto-processor; and

    means for suppressing (16) any forwarding of the output data if the means (14) for verifying determine that the input data at the input data memory location was changed during the calculation by the crypto-processor.

## Revendications

1. Procédé informatique de protection d'un calcul dans un algorithme cryptographique contre une attaque frauduleuse d'un processeur cryptographique qui met en oeuvre l'algorithme cryptographique, le calcul obtenant des données d'entrée pour générer des données de sortie, le procédé comprenant les étape suivantes :

   la délivrance (10) des données d'entrée pour le calcul à un emplacement mémoire de données d'entrée ;
   la réalisation (12) du calcul par le processeur cryptographique en utilisant les données d'entrée délivrées pour obtenir les données de sortie du calcul ;
   après la réalisation du calcul dans le processeur cryptographique, l'accès à l'emplacement mémoire de données d'entrée pour obtenir un contenu de l'emplacement mémoire de données d'entrée, la vérification (14) en utilisant le contenu de l'emplacement mémoire de données d'entrée si les données d'entrée ont été modifiées pendant le calcul, en utilisant un algorithme de vérification qui est différent du calcul ; et
   dans le cas où la vérification (14) indique que les données d'entrée à l'emplacement mémoire de données d'entrée ont été modifiées pendant le calcul par le processeur cryptographique, la suppression (16) d'un transfert des données de sortie du calcul.

2. Procédé selon la revendication 1, dans lequel
   à l'étape de la délivrance des données d'entrée les données d'entrée sont mémorisées à un emplacement mémoire de données d'entrée (1),
   en outre une somme de test est générée sur au moins une partie des données d'entrée et est mémorisée à l'emplacement mémoire de somme de test (22) ; et
   l'algorithme de vérification comporte les étapes partielles suivantes

   la récupération (24) d'un contenu de l'emplacement mémoire de données d'entrée ;
   la génération (26) d'une somme de test sur au moins une partie du contenu récupéré ;
   la récupération (28) d'un contenu de l'emplacement mémoire de somme de test ; et
   la comparaison (30) de la somme de test générée avec le contenu récupéré de l'emplacement mémoire de somme de test ; et

   le transfert (16) des données de sortie est supprimé dans le cas où la comparaison délivre un écart.

3. Procédé selon la revendication 1, dans lequel
   à l'étape de la délivrance les données d'entrée sont mémorisées à un emplacement mémoire de données d'entrée (32) ;
   au moins une partie des données d'entrée sont traitées conformément à un algorithme de traitement (34) pour obtenir des informations de sécurité, les informations de sécurité étant mémorisées à un emplacement mémoire d'informations de sécurité (36) ;
   l'algorithme de vérification comporte les étapes suivantes :

   la récupération (38) d'au moins une partie du contenu de l'emplacement mémoire d'informations de sécurité ;
   le traitement (40) du contenu de l'emplacement mémoire d'informations de sécurité au moyen d'un algorithme de contrôle,
   l'algorithme de contrôle étant conformé de façon à délivrer un résultat prédéterminé lorsque le contenu de l'emplacement mémoire d'informations de sécurité n'a pas été modifié (42) ; et

   le transfert des données de sortie est supprimé (16) dans le cas où l'algorithme de contrôle délivre un résultat différent du résultat prédéterminé.

4. Procédé selon l'une des revendications 1 à 3, dans lequel
   l'algorithme cryptographique comporte un autre calcul, et
   les informations de sécurité sont disponibles comme données entrées pour l'autre calcul dans le cas où l'algorithme de vérification délivre le résultat prédéterminé.

5. Procédé selon la revendication 3 ou 4, dans lequel
   l'algorithme de vérification comporte en outre une étape d'accès à l'emplacement mémoire de données d'entrée pour récupérer au moins une partie du contenu de l'emplacement mémoire de données d'entrée, et
   l'algorithme de contrôle est prévu pour utiliser en outre au moins la partie du contenu de l'emplacement mémoire de données d'entrée.

6. Procédé selon l'une des revendications 3 à 5, dans lequel
   l'algorithme de traitement pour générer des informations de sécurité comporte une multiplication d'une grandeur d'entrée, qui représente une partie des données d'entrée, par un nombre entier ;

l'algorithme de contrôle comporte une réduction modulaire du contenu de l'emplacement mémoire d'informations de sécurité par la grandeur d'entrée comme module, et

le résultat prédéterminé est « 0 ».

7. Procédé selon l'une des revendications 3 à 6, dans lequel

l'algorithme de traitement comporte une sommation d'une première grandeur d'entrée et d'un produit d'un nombre aléatoire et d'une deuxième grandeur d'entrée inférieure à 1 ;

l'algorithme de contrôle comporte une réduction modulaire du contenu de l'emplacement mémoire d'informations de sécurité par la deuxième grandeur d'entrée inférieure à 1 comme module ;

le résultat prédéterminé est la première grandeur d'entrée.

8. Procédé selon l'une des revendications précédentes dans lequel l'algorithme cryptographique est une exponentiation modulaire pour l'algorithme RSA avec reste chinois (CRT).

9. Procédé selon la revendication 8, dans lequel les données d'entrée délivrées sont m, p, dp, dq, qinv, t et rand, m étant un message de texte en clair à traiter, p et q représentant un premier nombre premier et un deuxième nombre premier dont le produit est égal à un module n, dp est un premier exposant auxiliaire, dq est un deuxième exposant auxiliaire, qinv est égal à $q^{-1}$ mod p, t est un nombre premier, et rand est un nombre aléatoire.

10. Procédé selon la revendication 9, dans lequel l'algorithme de traitement est conformé de la manière suivante :

$$p' = p \cdot t \ ;$$

$$dp' = dp + rand \cdot (p-1) \ ;$$

$$q' = q \cdot t \ ;$$

et/ou

$$dq' = dq + rand \cdot (q-1),$$

et

dans lequel l'algorithme de contrôle est conformé de la manière suivante :

$$p' \bmod p = 0 \ ;$$

$$q' \bmod q = 0 \ ;$$

$$dp' \bmod (p-1) = dp \ ;$$

et/ou

$$dq' \bmod (q-1) = dq \ ;$$

et

dans lequel le calcul cryptographique est le suivant :

$$sp' = m^{dp'} \bmod p' \ ;$$

ou

$$sq' = m^{dq'} \bmod q',$$

p', q', dp', dq' étant des informations de sécurité, dp, dq et 0 étant des résultats prédéterminés, et sp', sq' étant des données de sortie du calcul de l'algorithme cryptographique.

11. Procédé selon l'une des revendications précédentes qui comportent en outre les étapes suivantes :

la réalisation d'un l'algorithme de contrôle de résultat par un résultat du calcul de l'algorithme cryptographique et un contenu de l'emplacement mémoire de données d'entrée, l'algorithme de contrôle de résultat étant différent du calcul et délivrant un résultat prédéterminé lorsque l'emplacement mémoire de données d'entrée a un contenu non modifié, et lorsque le calcul cryptographique a été réalisé correctement ; et

la suppression du transfert lorsque l'algorithme de contrôle de résultat délivre un résultat différent du résultat prédéterminé.

12. Procédé selon la revendication 11, dans lequel le calcul est effectué de la manière suivante :

$$sp' = m^{dp'} \bmod p' \ ;$$

et/ou

$$sq' = m^{dq'} \bmod q',$$

où l'algorithme de contrôle de résultat est le suivant :

$$spt = sp' \bmod t \; ;$$

$$sqt = sq' \bmod t \; ;$$

$$dpt = dp' \bmod(t-1) \; ;$$

$$dqt = dq' \bmod(t-1) \; ;$$

$$spt^{dqt} = sqt^{dpt} \bmod t,$$

et
le résultat prédéterminé étant une égalité.

13. Procédé selon la revendication 11, dans lequel l'algorithme cryptographique comporte une exponentiation modulaire pour l'algorithme RSA avec reste chinois (CRT), le calcul est effectué de la manière suivante :

$$s = sq+\{[(sp-sq) \cdot qinv] \bmod p\} \cdot q;$$

et
où l'algorithme de contrôle de résultat est le suivant :

$$s \bmod p = sp \; ;$$

et/ou

$$s \bmod q = sq,$$

le résultat prédéterminé étant une condition d'égalité.

14. Dispositif informatique de protection d'un calcul dans un algorithme cryptographique vis-à-vis d'une attaque frauduleuse d'un processeur cryptographique qui met en oeuvre l'algorithme cryptographique, le calcul obtenant des données d'entrée pour générer des données de sortie, et ledit dispositif présentant les caractéristiques suivantes :

un dispositif de délivrance (10) des données d'entrée pour le calcul à un emplacement mémoire de données d'entrée ;
un dispositif de mise en oeuvre (12) du calcul par le processeur cryptographique en utilisant les données d'entrée délivrées pour obtenir des données de sortie du calcul ;
un dispositif de vérification (14) si les données d'entrée ont été modifiées pendant le calcul, en accédant à l'emplacement mémoire de données d'entrée pour obtenir un contenu de l'emplacement mémoire de données d'entrée, et en utilisant aussi bien algorithme de vérification, qui est différent du calcul, que le contenu de l'emplacement mémoire de données d'entrée, ledit dispositif de vérification comportant d'autres moyens de mise en oeuvre dudit algorithme de vérification après avoir réalisé le calcul dans le processeur cryptographique et
un dispositif de suppression (16) d'un transfert des données de sortie dans le cas où le dispositif (14) de vérification détermine que les données d'entrée à l'emplacement mémoire de données d'entrée ont été modifiées pendant le calcul par le processeur cryptographique.

Einrichtung zum
Bereitstellen von
Eingangsdaten — 10

Eingangsdaten

Einrichtung zum
Durchführen einer kryptographischen Berechnung — 12

Ausgangsdaten

Einrichtung zum
Überprüfen einer
Veränderung in den
Eingangsdaten — 14

Eingangsdaten o.k.

Eingangsdaten
verändert

Einrichtung zum
Unterdrücken der
Ausgangsdaten — 16

FIG 1

Speicherung
der Eingangsdaten
an einer ED-Speicherstelle    — 20    → ED-Speicherstelle

Bilden einer
Prüfsumme über
den ED und Speichern
an PS-Speicherstelle    — 22    → PS-Speicherstelle

## FIG 2a

Wiedergewinnen
von ED-Speicherstelle    — 24

Prüfsumme über
ED-Speicherstelle    — 26

Wiedergewinnen
von PS-Speicherstelle    — 28

Vergleichen der
Prüfsummen    — 30

## FIG 2b

Speichern der
Eingangsdaten
an ED-Speicherstelle — 32

→ ED-Speicherstelle

Verarbeiten der ED, um
Sicherheitsinform.
zu erhalten — 34

Speichern der SI
an SI-Speicherstelle — 36

→ SI-Speicherstelle

## FIG 3a

Wiedergewinnen
der SI-Speicherstelle — 38

Verarbeiten durch
Kontrollalgorithmus — 40

44

Vorbestimmtes
Resultat? — 42

ja →

Weitergabe
der Ausgangsdaten

nein

Unterdrücken der
Ausgangsdaten — 16

## FIG 3b

Eingabe: m, p, q, dp, dq, q$_{inv}$, t, rand — 50

p' = p·t
dp' = dp + rand · (p-1) — 52a

q' = q·t
dq' = dq + rand · (q-1) — 52b

$Sp' = m^{dp'} \bmod p'$ — 54a

$Sq' = m^{dq'} \bmod q'$ — 54b

56a
p' mod p = 0 ?
dp' mod (p-1) = dp ?

ERROR

56b
q' mod q = 0
dq' mod (q-1) = dq ?

Spt = Sp' mod t
dpt = dp' mod (t-1) — 58a

Sqt = Sq' mod t
dqt = dq' mod (t-1) — 58b

60 — $Spt^{dqt} = Sqt^{dpt} \bmod t ?$ → ERROR

Sp = Sp' mod p — 62a

Sq = Sq' mod q — 62b

64
$S = Sq + \{ [ (Sp - Sq) \cdot q_{nv} ] \bmod p \} \cdot q$

66a
S mod p = Sp

ERROR

66b
S mod q = Sq

68 — Ausgabe:
$S = m^{d} \bmod (p \cdot q)$

FIG 4

| $n := p \cdot q$ | EINGABE | AUSGABE |
|---|---|---|
| $dp := d \mod (p-1)$ | | |
| $dq := d \mod (q-1)$ | | $S = m^d \mod n$ |
| $q_{inv} := q^{-1} \mod p$ | | |

100

102

104

$$Sp := m^{dp} \mod p$$

106

$$Sq := m^{dq} \mod q$$

108

$$S = Sq + \{ [ (Sp - Sq) \cdot q_{nv} ] \mod p \} \cdot q$$

FIG 5 (Stand der Technik)